# EUROPEAN PATENT SPECIFICATION

(11) **EP 0 739 746 B1**
(45) Date of publication and mention of the grant of the patent: **27.01.1999**
(21) Application number: 96810255.8
(22) Date of filing: 22.04.1996
(51) Int. Cl.: B41M 3/00

(54) **Method for providing product having sucker layer**
Verfahren zur Herstellung von Produkten mit Saugerschicht
Procédé pour la préparation d'un produit ayant une couche de ventouse

(30) Priority: 26.04.1995 JP 137107/95; 18.08.1995 JP 245039/95
(43) Date of publication of application: 30.10.1996
(73) Proprietor: TEIKOKU PRINTING INKS MFG. CO., LTD, Tokyo 108 (JP); JUSHIINSATUSHA, LTD, Tokyo 133 (JP)
(72) Inventor: Kawai, Hideaki, c/o Jushiinsatusha, Ltd., Edogawa-ku, Tokyo 133 (JP); Kawai, Hideharu, c/o Jushiinsatusha, Ltd., Edogawa-ku, Tokyo 133 (JP)
(74) Representative: Nithardt, Roland

(56) References cited:
- No relevant documents disclosed

## Description

### BACKGROUND OF THE INVENTION

### Field of the Invention

The present invention relates to a method for providing a product having a printed sucker layer by means of which the product can adhere, adsorb or attach to a certain member, such as a notice board, a windowpane or a table, without using an adhesive or the like.

### Description of the Prior Art

When sticking a sheet-like member, such as a poster, a label, a shading film or a glass scattering-proof film, to a certain member, such as a notice board or a windowpane, an adhesive may be applied, in advance, to a portion of the certain member where the sheet-like member is to be stuck, or an adhesive may be applied, in advance, to the sheet-like member itself.

In either case, however, when the sheet-like member is separated from the certain member after the use, a mark of the adhesive may remain on the certain member or the certain member may be damaged due to difficulty in separation therebetween. Further, it is practically impossible to reuse the sheet-like member after separation.

The foregoing also essentially applies to a case where a non-sheet-like member, such as a container, a bottle, a cabinet, an equipment part, a display board or other daily-use articles, is used as being stuck on a certain member, such as a table. As appreciated, the difficulty in separation may also be raised in this case so that a mark of the adhesive may remain on the certain member or both the non-sheet-like member and the certain member may be damaged.

A plate magnet may be mounted on the non-sheet-like member for fixing the non-sheet-like member relative to the certain member. In this case, however, when the certain member is made of glass, nonferrous metal, such as aluminum, or synthetic resin, attraction therebetween is impossible. Further, if a precision instrument or sensor is located nearby, it is possible that the magnet can not be used so as to prevent an occurrence of failure due to magnetism.

Japanese Second (examined) Patent Publication No. 7-4909 (Japanese First (unexamined) Patent Publication No. 6-238845) discloses a method for manufacturing a sheet with a sucker layer. In this publication, a material is obtained by dissolving polyvinyl chloride resin with a mixed solvent of ethyl acetate or methylethyl ketone, and then a plasticizer is added for adjusting flexibility and softness to obtain an ink material as a material of the sucker layer.
Subsequently, by achieving a screen printing or the like using the obtained ink material, a sucker pattern is printed on a base sheet. Then, through a drying treatment, the sucker layer is fixed on the base sheet so that the sheet with the sucker layer is obtained.

However, in this publication, the sucker material contains various harmful organic solvents in large amounts so that the environmental pollution including the odor becomes a problem in the course of manufacturing. Further, in the printing of the sucker layer, a large amount of the ink material, that is, about 20 to 50 times as compared with the normal printing, is required due to a thick-walled padded structure of the sucker layer. Thus, a long time is required for the drying treatment to fix the sucker layer. Further, this publication fails to teach providing a sucker layer on the non-sheet-like member.

### SUMMARY OF THE INVENTION

Therefore, it is an object of the present invention to provide a method for manufacturing a sheet-like or non-sheet-like product having an improved sucker layer.

According to one aspect of the present invention, a manufacturing method comprises the steps of providing a sheet-like member; printing a soft and flexible sucker layer on the sheet-like member, using ultraviolet-reactive curing type ink, the sucker layer having a given sucker pattern including at least one sucker, the at least one sucker having such a shape as to ensure an adsorbing function as a sucker; and reactive-curing the sucker layer by means of ultraviolet radiation.

According to another aspect of the present invention, a manufacturing method comprises the steps of providing a sheet-like member; printing a soft and flexible sucker layer on the sheet-like member, using two-liquid reactive curing type ink, the sucker layer having a given sucker pattern including at least one sucker, the at least one sucker having such a shape as to ensure an adsorbing function as a sucker; and reactive-curing the sucker layer by applying a two-liquid reactive curing treatment.

According to another aspect of the present invention, a manufacturing method comprises the steps of providing a non-sheet-like member; printing a soft and flexible sucker layer on the non-sheet-like member, using one of quick-drying type ink, ultraviolet-reactive curing type ink and two-liquid reactive curing type ink, the sucker layer having a given sucker pattern including at least one sucker, the at least one sucker having such a shape as to ensure an adsorbing function as a sucker; and applying a fixation treatment to the sucker layer.

It may be arranged that the sucker layer is printed by means of a screen printing.

It may be arranged that the at least one sucker has a cavity and a thick-walled outer bank surrounding the cavity.

It may be arranged that the sucker pattern includes a plurality of the suckers which are arranged in a net fashion.

It may be arranged that the ultraviolet-reactive curing type ink is prepared by mixing at least synthetic resin, as a main component, and an ultraviolet-reactive curing agent.

It may be arranged that the two-liquid reactive curing type ink is prepared by mixing at least synthetic resin, as a main component, and a reactive curing agent.

It may be arranged that the non-sheet-like member is a mold made of one of synthetic resin, metal and glass.

### BRIEF DESCRIPTION OF THE DRAWINGS

The present invention will be understood more fully from the detailed description given hereinbelow, taken in conjunction with the accompanying drawings.

In the drawings:
Fig. 1 is a plan view of a sheet-like product, seen from a side of its attaching surface with a printed sucker layer, according to a first or second preferred embodiment of the present invention;
Fig. 2 is a side sectional view of the sheet-like product shown in Fig. 1;
Fig. 3 is a diagram for explaining a process of printing a sucker layer on a sheet-like member using a curved-surface printing method;
Fig. 4 is a diagram for explaining a process of curing the printed ultraviolet-reactive curing type ink using an ultraviolet radiation according to the first preferred embodiment;
Fig. 5 is an explanatory diagram showing a poster with a printed sucker layer according to the first or second preferred embodiment;
Fig. 6 is a side sectional view of a sheet-like product with an ultraviolet shielding film applied thereto for protecting a printed sucker layer, according to a modification of the first or second preferred embodiment;
Fig. 7 is a diagram for explaining a non-sheet-like product according to a third preferred embodiment of the present invention, wherein a printed sucker layer is applied to a molding;
Fig. 8 is a side sectional view of the non-sheet-like product shown in Fig. 7;
Fig. 9 is a plan view of the non-sheet-like product shown in Fig. 7, seen from a side of its attaching surface with the printed sucker layer;
Fig. 10 is a diagram for explaining a process of printing a sucker layer on a molding according to the third preferred embodiment;
Fig. 11 is a diagram for explaining a printing method as disclosed in Japanese Patent No. 909,300;
Fig. 12 is a diagram showing an example of a sucker pattern of a sucker layer to be printed; and
Fig. 13 is a diagram showing another example of a sucker pattern of a sucker layer to be printed.

### DESCRIPTION OF THE PREFERRED EMBODIMENT

Now, preferred embodiments of the present invention will be described hereinbelow with reference to the accompanying drawings.

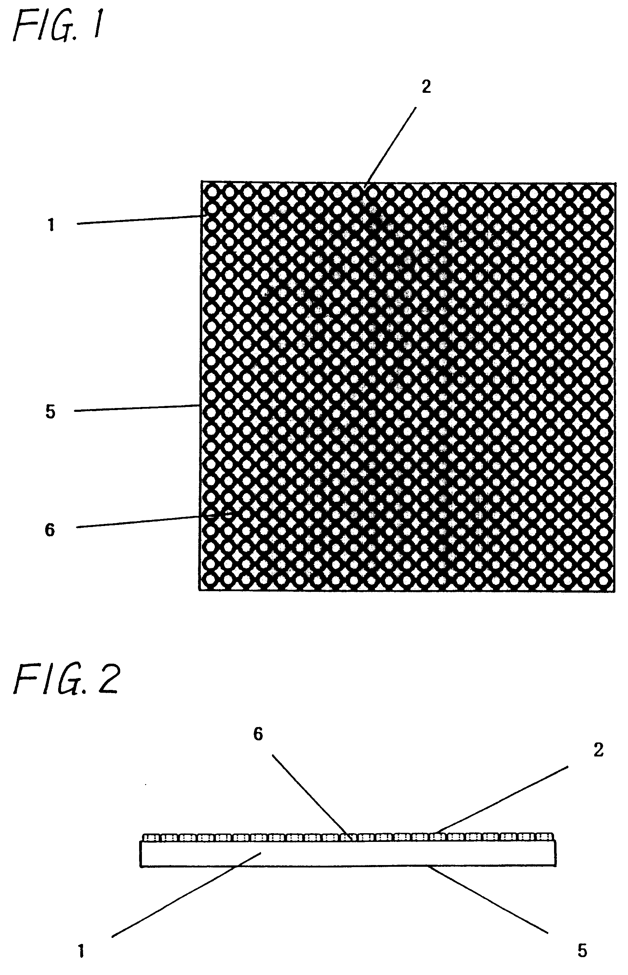

The first preferred embodiment will be first described hereinbelow with reference to Figs. 1 to 5.

In the figures, numeral 1 denotes a transparent or opaque sheet-like member having a thickness of about 0.1mm to 0.5mm. The sheet-like member 1 has been subjected to a treatment for a printing aptitude and is in the form of a sheet or film made of polyolefine synthetic resin, polyester resin, vinyl chloride resin, other synthetic resin or synthetic paper. Numeral 6 denotes a sucker layer printed on an attaching side 2 of the sheet-like member 1 using a screen printing or the like. In this preferred embodiment, the sucker layer 6 has a sucker pattern 4 including a large number of suckers arranged in a chain or net fashion. Each sucker may have a circular shape, an elliptical shape, a polygonal shape, a box shape, a diamond shape, a hexagonal shape, a shape of a mesh of a net, a flower shape, a shape of a room of a honeycomb or the like, whichever can ensure an adsorbing function as a sucker. Size and shape of the sucker may be determined depending on the purpose of a final sheet product 5 to be used. Further, the number of the suckers may also be changed depending on the purpose, and thus, is not limited to that shown in the figures, but may take a larger or smaller value including one.

As a material 3 for the sucker layer 6 which is soft and flexible, it is preferable to newly prepare ultraviolet-reactive curing type ink for a sucker layer printing by mixing synthetic resin, such as acrylic resin, urethane resin or vinyl chloride resin, as a main component, with an ultraviolet-reactive curing agent, a plasticizer, an additive agent, a solvent and the like. On the other hand, the sucker layer material 3 may be prepared, for example, by mixing ultraviolet-reactive curing type ink containing acrylic resin, urethane resin or the like as a main component, such as UV-FIL, UV-EXA, UV-PAL type ink or the like, produced by Teikoku Ink Manufacturing Company, Limited, UV-series ink produced by Jujo Chemical Industry Kabushiki Kaisha or UV-type ink produced by Toyo Ink Manufacturing Kabushiki Kaisha, with a plasticizer, a solvent and other synthetic resin as additive agents.

A degree of vacuum or an adsorption degree of each sucker of the sucker layer 6 upon being pressed onto, for example, a notice board increases as a volume of a cavity formed in each sucker increases. Thus, it is preferable that padding of the sucker layer 6 for providing outer rim banks, which define therein the cavities, of the suckers is made as thick as possible.

It is preferable that a print plate 8 to be used for the screen printing employs an extra thick plate-making screen cloth of about 70 to 150 meshes and further that a thickness of a plate-making photosensitive sol film 12, which is normally set about 10µm in the plate making, is increased to about 50 to 200µm.

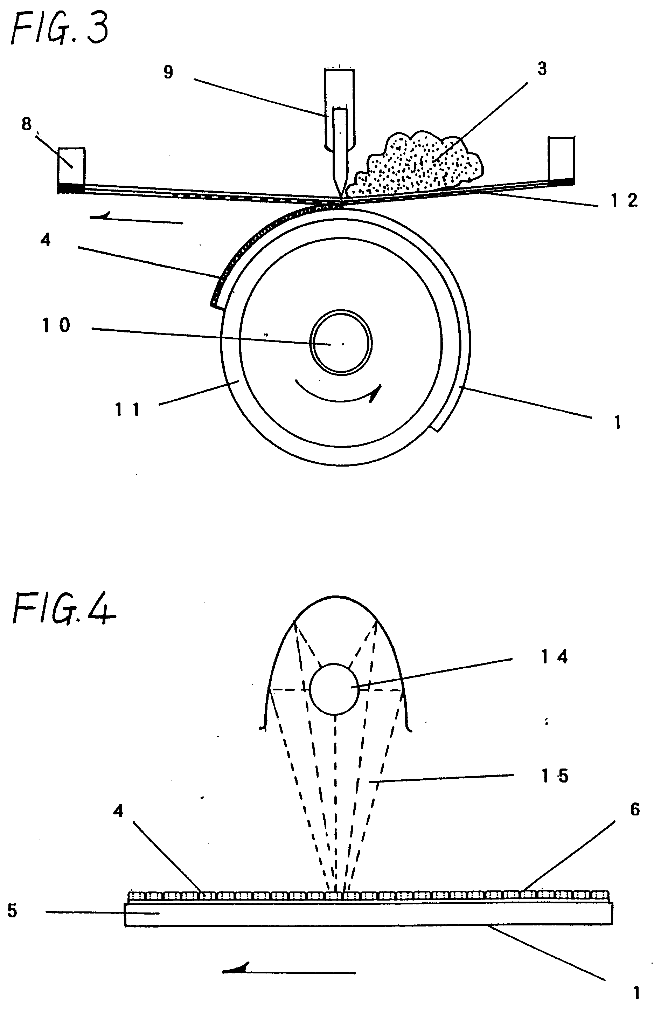

As the screen printing method for printing the sucker layer 6, a known flat-surface screen printing method may be used, wherein the printing is performed on a flat film or sheet by moving a printing squeegee while the printing plate and the sheet to be printed are fixed. On the other hand, if, due to the sucker layer being large in thickness and the printing ink being large in amount and having viscosity, the sheet is adhered to the printing plate and can not be separated therefrom easily so that the good-quality printing can not be achieved in the flat-surface screen printing, a curved-surface screen printing method may be employed as shown in Fig. 3. In Fig. 3, the sheet-like member 1 is held around a cylindrical printing drum 11 which is rotated by means of a rotation shaft 10. In the curved-surface screen printing method, a printing squeegee 9 is fixed at a given position, and the printing is performed by rotating the printing drum 11 while moving the print plate 8 linearly as shown by an arrow in Fig. 3. The good-quality sucker layer 6 can be easily achieved in this printing method.

After the sucker layer 6 is printed on the sheet-like member 1, ultraviolet radiation 15 is performed by means of an ultraviolet radiation device 14, as shown in Fig. 4, so as to fix the sucker layer 6. Since the ultraviolet radiation is performed only for seconds for fixing the sucker layer 6, a fixation time can be largely reduced as compared with the foregoing prior art.

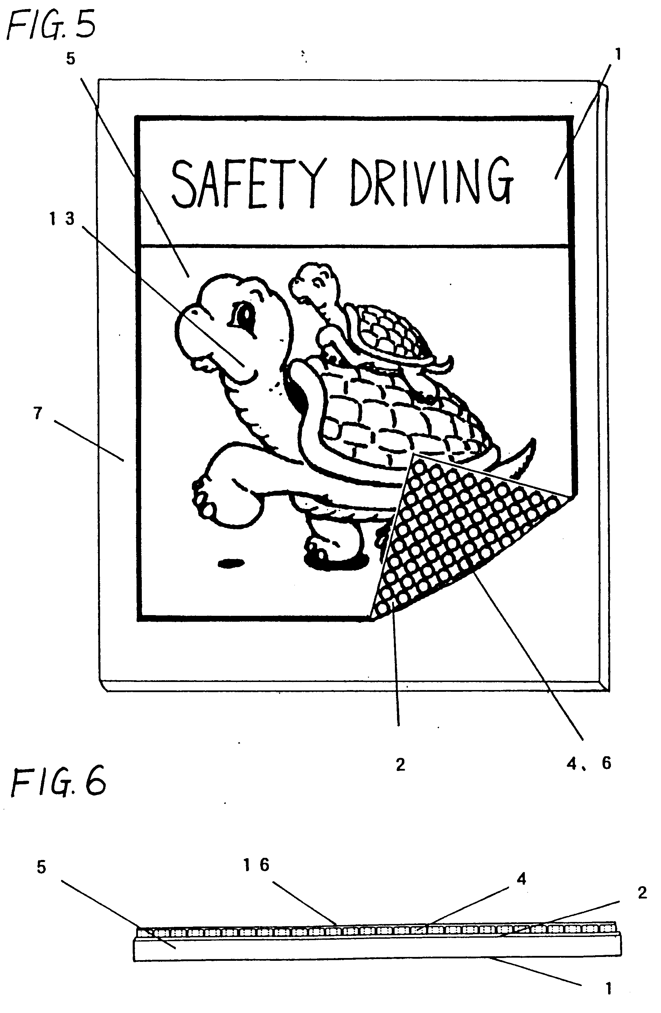

As shown in Fig. 5, the sheet product 5 with the sucker layer 6 printed on the sheet-like member 1 is used as a poster or the like with a proper display printing 13 applied on a front surface thereof opposite to a side where the sucker layer 6 is provided.

On the other hand, it may be arranged that the display printing 13 is first applied on the front surface and then the transparent sucker layer 6 is printed on the display printing 13. With this arrangement, when a label, a shading film or the like is attached to a windowpane inside a building or car, the display printing 13 can be observed from the exterior. Similar effect may be achieved by providing the display printing 13 on the front surface of the transparent film or sheet and the sucker layer 6 on the reverse side thereof and by observing it from the reverse side.

The sheet product 5 according to the first preferred embodiment can be easily separated from the windowpane or the like and can be repeatedly reused after separation. Further, since the aqueous or low-solvent ultraviolet-reactive curing type ink is used for the sucker layer 6, the foregoing situation of environmental pollution has been improved. Moreover, since the sucker layer 6 of the ultraviolet-reactive curing type ink is not dissolved by an organic solution or a detergent, a time-domain variation or deterioration of the sucker layer can be largely improved.

Now, the second preferred embodiment will be described hereinbelow.

The second preferred embodiment differs from the first preferred embodiment in that a two-liquid reactive curing type ink is used instead of the ultraviolet-reactive curing type ink and that a two-liquid reactive curing treatment, such as a hot-air treatment or a radical curing treatment using electromagnetic radiation or the like, is performed, instead of the ultraviolet radiation, for fixing the sucker layer 6. The other arrangement is the same as that in the first preferred embodiment.

The two-liquid reactive curing type ink is prepared by mixing synthetic resin, such as epoxy resin, urethane resin or silicone resin, as a main component, with a reactive curing agent, a plasticizer, an additive agent, a solvent and the like.

Since the two-liquid reactive curing type ink is used for the sucker layer 6, effects similar to those achieved in the first preferred embodiment are also achieved in the second preferred embodiment.

In the first and second preferred embodiments, the sheet product 5 can be used as a sucker type fastener by cutting it into strips and using them in combination.

Further, as shown in Fig. 6, it may be arranged that the sucker layer 6 is covered by a soft and flexible coating 16 made of ultraviolet shielding ink containing an ultraviolet absorbing agent and the like. With this arrangement, a time-domain deterioration of the sucker layer due to exposure to ultraviolet or the like can be prevented.

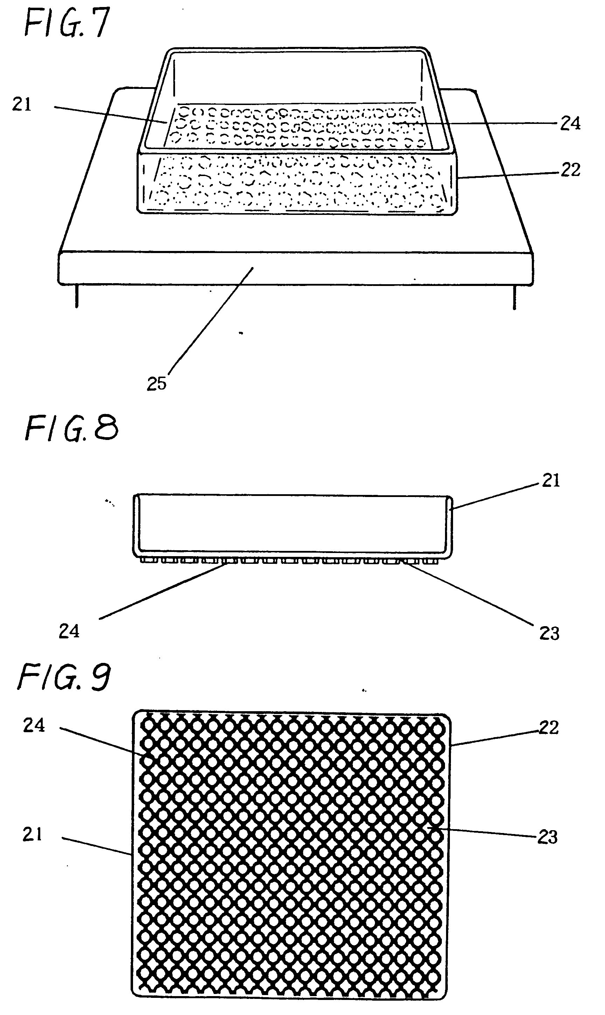

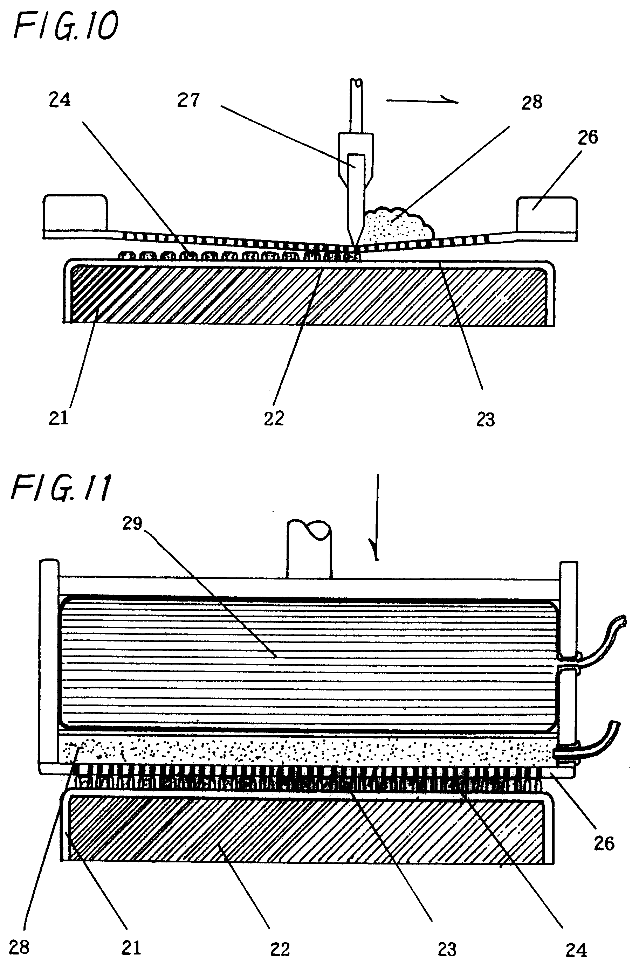

Now, the third preferred embodiment will be described hereinbelow with reference to Figs. 7 to 10.

In the third preferred embodiment, a sucker layer 24 is printed on an attaching surface 23 of a mold 22, as a non-sheet-like member, such as a container, a cabinet, an equipment part or other daily-use articles made of synthetic resin, such as acrylic resin or vinyl chloride resin, metal or glass. As in the first or second preferred embodiment, as a material 28 for the sucker layer 24 which is soft and flexible, it is preferable to newly prepare ultraviolet-reactive curing type ink, two-liquid reactive curing type ink or quick-drying ink by mixing synthetic resin, such as acrylic resin, urethane resin, vinyl chloride resin, epoxy resin or silicone resin, as a main component, with a reactive curing agent, a plasticizer, an additive agent, a solvent and the like. On the other hand, the sucker layer material 28 may be prepared, for example, by mixing ultraviolet-reactive curing type ink containing acrylic resin, urethane resin or the like as a main component, such as UV-FIL, UV-EXA, UV-PAL type ink or the like, or PS or POS-series ink of an epoxy resin two-liquid reactive curing type produced by Teikoku Ink Manufacturing Company, Limited, or FDSS-series UV-type ink or SSFX-series two-liquid reactive curing type ink produced by Toyo Ink Manufacturing Kabushiki Kaisha, with a plasticizer, a solvent and other additive agents.

In Fig. 10, the sucker layer 24 is printed on the attaching surface 23 of the mold 22 so that a final non-sheet-like product 21 is achieved. The printing of the sucker layer 24 is performed by moving a printing squeegee 27 in a direction as indicated by an arrow, while a printing plate 26 and the mold 22 are fixed. In this preferred embodiment, a thickness of the photosensitive film is increased to about 100 to 300µm.

As appreciated, the sucker pattern of the sucker layer 24 is the same as that described in the first preferred embodiment.

Fig. 11 shows an example of the screen printing method for applying the sucker layer on the attaching surface 23 of the mold 22, as suggested by Japanese Patent No. 909,300. In this printing method, the ink material 28 is pressed out by uniform pressures applied thereto from above so that the padding printing can be reliably achieved for providing the thick-walled outer banks of the suckers. In Fig. 11, numeral 29 denotes a bag filled with liquid or the like.

As in the first or second preferred embodiment, the ultraviolet shield coating 16 shown in Fig. 6 may also be provided on the sucker layer 24 for the same purpose.

According to the third preferred embodiment, the non-sheet-like product 21 can be fixed or prevented from slipping, relative to a certain member, such as a table 25, by means of the sucker layer 24. Further, the product 21 can be easily separated from the table 25 or the like and can be repeatedly reused after separation. Moreover, on account of the material 28 used for the sucker layer 24, the corresponding effects similar to those in the first or second preferred embodiment can also be achieved.

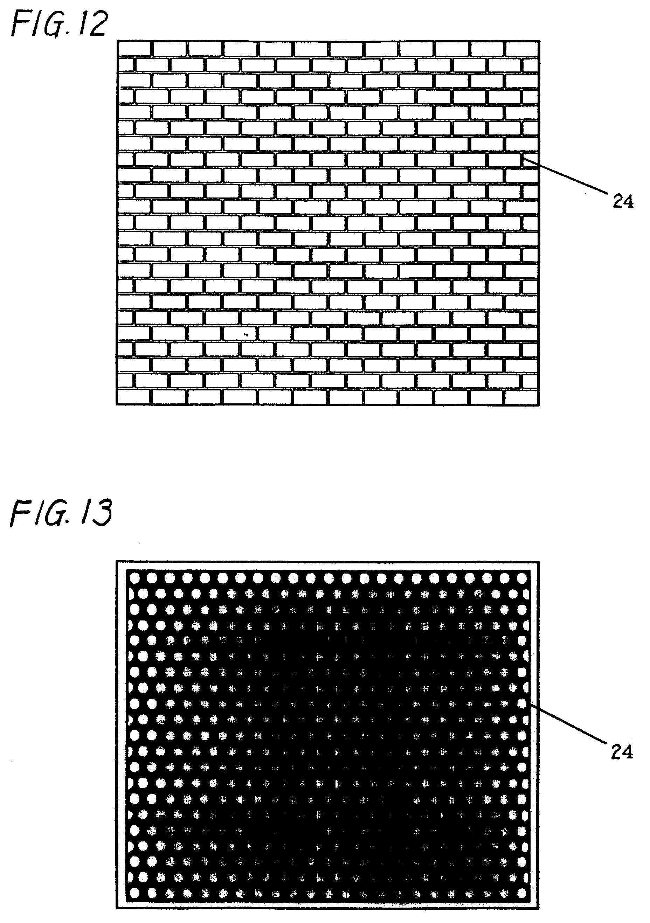

Fig. 12 is a diagram showing an example of a sucker pattern of the sucker layer, and Fig. 13 is a diagram showing another example of a sucker pattern of the sucker layer.

While the present invention has been described in terms of the preferred embodiments, the invention is not to be limited thereto, but can be embodied in various ways without departing from the principle of the invention as defined in the appended claims.

## Claims

1. A manufacturing method comprising the steps of:
providing a sheet-like member;
printing a soft and flexible sucker layer on said sheet-like member, using ultraviolet-reactive curing type ink, said sucker layer having a given sucker pattern including at least one sucker, said at least one sucker having such a shape as to ensure an adsorbing function as a sucker; and
reactive-curing said sucker layer by means of ultraviolet radiation.

2. The manufacturing method according to claim 1, wherein said sucker layer is printed by means of a screen printing.

3. The manufacturing method according to claim 1, wherein said at least one sucker has a cavity and a thick-walled outer bank surrounding said cavity.

4. The manufacturing method according to claim 1, wherein said ultraviolet-reactive curing type ink is prepared by mixing at least synthetic resin, as a main component, and an ultraviolet-reactive curing agent.

5. The manufacturing method according to claim 1, wherein said sucker pattern includes a plurality of the suckers which are arranged in a net fashion.

6. A manufacturing method comprising the steps of:
providing a sheet-like member;
printing a soft and flexible sucker layer on said sheet-like member, using two-liquid reactive curing type ink, said sucker layer having a given sucker pattern including at least one sucker, said at least one sucker having such a shape as to ensure an adsorbing function as a sucker; and
reactive-curing said sucker layer by applying a two-liquid reactive curing treatment.

7. The manufacturing method according to claim 6, wherein said sucker layer is printed by means of a screen printing.

8. The manufacturing method according to claim 6, wherein said at least one sucker has a cavity and a thick-walled outer bank surrounding said cavity.

9. The manufacturing method according to claim 6, wherein said two-liquid reactive curing type ink is prepared by mixing at least synthetic resin, as a main component, and a reactive curing agent.

10. The manufacturing method according to claim 6, wherein said sucker pattern includes a plurality of the suckers which are arranged in a net fashion.

11. A manufacturing method comprising the steps of:
providing a non-sheet-like member;
printing a soft and flexible sucker layer on said non-sheet-like member, using one of quick-drying type ink, ultraviolet-reactive curing type ink and two-liquid reactive curing type ink, said sucker layer having a given sucker pattern including at least one sucker, said at least one sucker having such a shape as to ensure an adsorbing function as a sucker; and
applying a fixation treatment to said sucker layer.

12. The manufacturing method according to claim 11, wherein said sucker layer is printed by means of a screen printing.

13. The manufacturing method according to claim 11, wherein said at least one sucker has a cavity and a thick-walled outer bank surrounding said cavity.

14. The manufacturing method according to claim 11, wherein said non-sheet-like member is a mold made of one of synthetic resin, metal and glass.

15. The manufacturing method according to claim 11, wherein said sucker pattern includes a plurality of the suckers which are arranged in a net fashion.

## Patentansprüche

1. Herstellungsverfahren, welches folgende Schritte aufweist:
Schaffen eines blattähnlichen Elements;
Drucken einer weichen und flexiblen Saugerschicht auf dem blattähnlichen Element unter Verwendung einer Tinte des Ultraviolett-Reaktiv-Fixierungstyps, wobei die Saugerschicht ein vorgegebenes Saugmuster mit mindestens einem Saugnapf bzw. Saugfuß aufweist, wobei der mindestens eine Saugnapf bzw. Saugfuß eine derartige Form aufweist, um eine Adsorptionsfunktion als ein Saugnapf bzw. Saugfuß sicherzustellen; und
Reaktiv-Fixieren der Saugerschicht mittels ultravioletter Strahlung.

2. Herstellungsverfahren nach Anspruch 1,
**dadurch gekennzeichnet,** daß
die Saugerschicht mittels Siebdruck gedruckt wird.

3. Herstellungsverfahren nach Anspruch 1,
**dadurch gekennzeichnet,** daß
der mindestens eine Saugnapf bzw. Saugfuß eine Aushöhlung und eine dickwandige äußere Wandung aufweist, die die Aushöhlung umgibt.

4. Herstellungsverfahren nach Anspruch 1,
**dadurch gekennzeichnet,** daß
die Tinte des Ultraviolett-Reaktiv-Fixierungstyps dadurch hergestellt wird, daß mindestens Kunstharz als Hauptbestandteil und ein Ultraviolett-Reaktiv-Fixierungsmittel gemischt werden.

5. Herstellungsverfahren nach Anspruch 1,
**dadurch gekennzeichnet,** daß
das Saugmuster eine Vielzahl der Saugnäpfe bzw. Saugfüße beinhaltet, welche in der Art eines Netzes angeordnet sind.

6. Herstellungsverfahren, welches folgende Schritte aufweist:
Schaffen eines blattähnlichen Elements;
Drucken einer weichen und flexiblen Saugerschicht auf dem blattähnlichen Element unter Verwendung einer Tinte des Doppelflüssigkeits-Reaktiv-Fixierungstyps, wobei die Saugerschicht ein vorgegebenes Saugmuster mit mindestens einem Saugnapf bzw. Saugfuß aufweist, wobei der mindestens eine Saugnapf bzw. Saugfuß eine derartige Form aufweist, um eine Adsorptionsfunktion als ein Saugnapf bzw. Saugfuß sicherzustellen; und
Reaktiv-Fixieren der Saugerschicht mittels Anwendung einer Doppelflüssigkeits-Reaktiv-Fixierungs-Behandlung.

7. Herstellungsverfahren nach Anspruch 6,
**dadurch gekennzeichnet,** daß
die Saugerschicht mittels Siebdruck gedruckt wird.

8. Herstellungsverfahren nach Anspruch 6,
**dadurch gekennzeichnet,** daß
der mindestens eine Saugnapf bzw. Saugfuß eine Aushöhlung und eine dickwandige äußere Wandung aufweist, die die Aushöhlung umgibt.

9. Herstellungsverfahren nach Anspruch 6,
**dadurch gekennzeichnet,** daß
die Tinte des Doppelflüssigkeits-Reaktiv-Fixierungstyps dadurch hergestellt wird, daß mindestens Kunstharz als Hauptbestandteil und ein Reaktiv-Fixierungsmittel gemischt werden.

10. Herstellungsverfahren nach Anspruch 6,
**dadurch gekennzeichnet,** daß
das Saugmuster eine Vielzahl der Saugnäpfe bzw. Saugfüße beinhaltet, welche in der Art eines Netzes angeordnet sind.

11. Herstellungsverfahren, welches folgende Schritte aufweist:
Schaffen eines nicht-blattähnlichen Elements;
Drucken einer weichen und flexiblen Saugerschicht auf dem nicht-blattähnlichen Element unter Verwendung einer Tinte entweder des schnelltrocknenden Typs, des Ultraviolett-Reaktiv-Fixierungstyps oder des Doppelflüssigkeits-Reaktiv-Fixierungstyps, wobei die Saugerschicht ein vorgegebenes Saugmuster mit mindestens einem Saugnapf bzw. Saugfuß aufweist, wobei der mindestens eine Saugnapf bzw. Saugfuß eine derartige Form aufweist, um eine Adsorptionsfunktion als ein Saugnapf bzw. Saugfuß sicherzustellen; und
Anwendung einer Fixierungsbehandlung auf die Saugerschicht.

12. Herstellungsverfahren nach Anspruch 11,
**dadurch gekennzeichnet,** daß
die Saugerschicht mittels Siebdruck gedruckt wird.

13. Herstellungsverfahren nach Anspruch 11,
**dadurch gekennzeichnet,** daß
der mindestens eine Saugnapf bzw. Saugfuß eine Aushöhlung und eine dickwandige äußere Wandung aufweist, die die Aushöhlung umgibt.

14. Herstellungsverfahren nach Anspruch 11,
**dadurch gekennzeichnet,** daß
das nicht-blattähnliche Element ein Formteil bzw. ein gegossenes Teil entweder aus Kunstharz, Metall oder Glas ist.

15. Herstellungsverfahren nach Anspruch 11,
**dadurch gekennzeichnet,** daß
das Saugmuster eine Vielzahl der Saugnäpfe bzw. Saugfüße beinhaltet, welche in der Art eines Netzes angeordnet sind.

## Revendications

1. Procédé de fabrication comprenant les étapes de :
fourniture d'un élément sous forme de feuille;
impression d'une couche ventouse flexible et molle sur ledit élément sous forme de feuille, en utilisant une encre du type polymérisable par réaction aux ultraviolets, ladite couche ventouse ayant un arrangement de ventouses donné comportant au moins une ventouse, ladite au moins une ventouse ayant une forme telle pour assurer une fonction d'adsorption de ventouse; et
polymérisation par réaction de ladite couche ventouse au moyen d'un rayonnement ultraviolet.

2. Procédé de fabrication selon la revendication 1, dans lequel ladite couche ventouse est imprimée par sérigraphie.

3. Procédé de fabrication selon la revendication 1, dans lequel ladite au moins une ventouse a une cavité et un bord extérieur à paroi épaisse entourant ladite cavité.

4. Procédé de fabrication selon la revendication 1, dans lequel ladite encre du type polymérisable par réaction aux ultraviolets est préparée en mélangeant au moins une résine synthétique, comme composant principal, et un agent de polymérisation par réaction aux ultraviolets.

5. Procédé de fabrication selon la revendication 1, dans lequel ledit arrangement de ventouses comprend une pluralité de ventouses disposées en forme de réseau.

6. Procédé de fabrication comprenant les étapes de :
fourniture d'un élément sous forme de feuille;
impression d'une couche ventouse flexible et molle sur ledit élément sous forme de feuille, en utilisant une encre du type polymérisable par réaction de deux liquides, ladite couche ventouse ayant un arrangement de ventouses donné comportant au moins une ventouse, ladite au moins une ventouse ayant une forme telle pour assurer une fonction d'adsorption de ventouse; et
polymérisation par réaction de ladite couche ventouse par application d'un traitement de polymérisation par réaction de deux liquides.

7. Procédé de fabrication selon la revendication 6, dans lequel ladite couche ventouse est imprimée par sérigraphie.

8. Procédé de fabrication selon la revendication 6, dans lequel ladite au moins une ventouse a une cavité et un bord extérieur à paroi épaisse entourant ladite cavité.

9. Procédé de fabrication selon la revendication 6, dans lequel ladite encre du type polymérisable par réaction de deux liquides est préparée en mélangeant au moins une résine synthétique, comme composant principal, et un agent de polymérisation par réaction.

10. Procédé de fabrication selon la revendication 6, dans lequel ledit arrangement de ventouses comprend une pluralité de ventouses disposées en forme de réseau.

11. Procédé de fabrication comprenant les étapes de :
fourniture d'un élément n'ayant pas une forme de feuille;
impression d'une couche ventouse flexible et molle sur ledit élément n'ayant pas une forme de feuille, en utilisant une encre parmi une encre du type à séchage rapide, une encre du type polymérisable par réaction aux ultraviolets et une encre du type polymérisable par réaction de deux liquides, ladite couche ventouse ayant un arrangement de ventouses donné comportant au moins une ventouse, ladite au moins une ventouse ayant une forme telle pour assurer une fonction d'adsorption de ventouse; et
application d'un traitement de fixation à ladite couche ventouse.

12. Procédé de fabrication selon la revendication 11, dans lequel ladite couche ventouse est imprimée par sérigraphie.

13. Procédé de fabrication selon la revendication 11, dans lequel ladite au moins une ventouse a une cavité et un bord extérieur à paroi épaisse entourant ladite cavité.

14. Procédé de fabrication selon la revendication 11, dans lequel ledit élément n'ayant pas une forme de feuille est un moule réalisé en une matière parmi une résine synthétique, un métal et du verre.

15. Procédé de fabrication selon la revendication 11, dans lequel ledit réseau de ventouses comprend une pluralité de ventouses disposées en forme de réseau.
